# EUROPÄISCHE PATENTSCHRIFT

(11) **EP 1 259 778 B1**
(45) Veröffentlichungstag und Bekanntmachung des Hinweises auf die Patenterteilung: **21.09.2005**
(21) Anmeldenummer: 01913520.1
(22) Anmeldetag: 19.01.2001
(51) Int. Cl.: G01C 21/34

(54) **NAVIGATIONSSYSTEM UND VERFAHREN ZUR KONFIGURIERUNG EINES NAVIGATIONSSYSTEMS**
NAVIGATION SYSTEM AND METHOD FOR CONFIGURING A NAVIGATION SYSTEM
SYSTEME DE NAVIGATION ET PROCEDE DE CONFIGURATION D'UN SYSTEME DE NAVIGATION

(30) Priorität: 04.02.2000 DE 10004967
(43) Veröffentlichungstag der Anmeldung: 27.11.2002
(73) Patentinhaber: ROBERT BOSCH GMBH, 70442 Stuttgart (DE)
(72) Erfinder: PETZOLD, Bernd, 31234 Edemissen (DE); HAHLWEG, Cornelius, 31139 Hildesheim (DE); DRAEGER, Gerd, 38102 Braunschweig (DE); KERSKEN, Ulrich, 31199 Diekholzen (DE)
(86) Internationale Anmeldenummer: PCT/DE2001/000210
(87) Internationale Veröffentlichungsnummer: WO 2001/057476

(56) Entgegenhaltungen:
- EP-A- 0 803 705
- EP-A- 0 967 460
- DE-A- 19 753 172

## Beschreibung

### Technisches Gebiet

Die Erfindung betrifft ein Verfahren zur Konfigurierung eines Navigationssystems sowie ein Navigationssystem, welches aufgrund vorgegebener Verhaltensmuster des Nutzers und aufgrund von Nutzerpräferenzen mindestens eine Routenempfehlung vorschlagen kann.

### Stand der Technik

Navigationssysteme zur Unterstützung eines Verkehrsteilnehmers wie insbesondere eines Autofahrers sind bekannt und bestehen im wesentlichen aus den Subsystemen (a) Digitale Straßenkarte, (b) Rechenmodul zur Fahrtroutenberechnung, (c) Positionsbestimmung, (d) Systemverwaltung, (e) Sensorik zur Erkennung von Fahrzeugbewegungen, (f) Eingabeeinheit und (e) Ausgabeeinheit für die Bedienung und Zielführung. Die Routenberechnung erfolgt in der Regel auf der Basis von verschiedenen Optimierungsparametern, die vom Nutzer vorab eingestellt werden müssen oder bereits herstellerseitig in den Algorithmen zur Routenberechnung fest verankert sind. Die Optimierung erfolgt mit Hilfe von in einer Datenbasis enthaltenen Bewertungen der beteiligten Streckenelemente, welche zum Beispiel Länge, mögliche Geschwindigkeit, Straßentyp und dergleichen umfassen können. Die Auswahl einer optimalen Route kann zum Beispiel in der Zusammenstellung der schnellsten oder der kürzesten Route bestehen. Welche Gewichtung hier vorgenommen wird, kann durch die persönlichen Nutzerpräferenzen beeinflusst werden.

Die herstellerseitig vorgegebene Optimierung ist in der Regel auf einen "Durchschnittsfahrer" parametrisiert und liefert daher auch nur für einen solchen eine optimale Route. Unterschiedliche Fahrer bewerten die Routenempfehlung jedoch in aller Regel verschieden. Es werden zum Beispiel bestimmte Straßentypen bevorzugt beziehungsweise gemieden, oder die Durchschnittsgeschwindigkeit auf Autobahnen variiert je nach Fahrzeugtyp, Fahrertemperament oder dergleichen. Eine Einbeziehung dieses individuellen Fahrerverhaltens oder von anderen Präferenzen bei der Routenwahl (zum Beispiel Bevorzugung landschaftlich schöner Strecken) erfolgt derzeit bestenfalls durch eine manuelle und in der Regel nur bei stehendem Fahrzeug mögliche Eingabe von vorgegebenen Parametern. Dies erschwert insbesondere mit steigender Parameterzahl die Übersichtlichkeit und Bedienbarkeit des Navigationssystems, so dass eine sinnvoll abgestimmte Modifikation aller relevanten Parameter nur von erfahrenen bzw. technisch interessierten Benutzern erwartet werden kann.

EP-A-0 803 705 offenbart die Konfiguration eines Navigationssystems, bei dem automatisch Nutzerpräferenzen für nachfolgende Routenberechnungen erfasst und/oder angepasst werden. Dazu werden vom Nutzer zurückgelegte Fahrtrouten als sogenannte "preferred route data" aufgezeichnet und diese mit einer Fahrtroute verglichen, die aufgrund von auf einer CD-ROM gespeicherten Informationen berechnet wurde. Aus dem Vergleich der beiden Routen werden die Nutzerpräferenzen bestimmt. Die auf diese Weise ermittelten Nutzerpräferenzen umfassen zum einen konkret bevorzugte Streckenabschnitte, zum anderen aber auch abstrahierte Präferenzen, wie beispielsweise eine Bevorzugung von Streckenabschnitten mit einer Mindeststraßenbreite, einer Mindestanzahl von Fahrspuren pro Fahrtrichtung usw.

WO-A-92/08952 offenbart ein Fahrzeugnavigationssystem, das eine Fahrtroute von einem aktuellen Fahrzeugstandort zu einem vom Benutzer vorgegebenen Fahrtziel bestimmt. Dazu wird durch einen Navigationscomputer eine unter dem Gesichtspunkt kürzester Strecke oder wahlweise kürzester Fahrtdauer optimale Route berechnet, wobei zusätzlich Nutzerpräferenzen, wie zum Beispiel bevorzugte Verwendung von Schnellstraßen oder mehrspurigen Straßen, berücksichtigt werden. Nach erfolgter Routenberechnung wird dem Benutzer eine Mehrzahl von Routen nach einem der genannten Optimierungskriterien, nämlich kürzeste Strecke oder Fahrtzeit, sortiert zur Auswahl angeboten.

WO-A-93/09511 offenbart ein Fahrzeugnavigationssystem, das eine Fahrtroute von einem Start- zu einem Zielort unter Berücksichtigung von Nutzerpräferenzen bestimmt.

Bei der Routenbestimmung wird derart vorgegangen, dass in einem ersten Schritt alle möglichen Fahrtrouten vom Start- zum Zielort aus einer digitalen Karte ausgelesen werden. Anschließend wird mittels eines Fuzzy-Entscheiders aus der Menge der möglichen Fahrtrouten unter Berücksichtigung von Nutzerpräferenzen diejenige Fahrtroute aus der Menge der möglichen Fahrtrouten ausgewählt, die den Nutzerpräferenzen und ggf. weiteren Randbedingungen am besten genügt.

### Darstellung der Erfindung, Aufgabe, Lösung, Vorteile

Aufgabe der vorliegenden Erfindung war es, ein Navigationssystem und ein Verfahren zur Konfigurierung eines solchen Navigationssystems zur Verfügung zu stellen, welche eine individuelle Anpassung der Nutzerpräferenzen erlauben, ohne dass hierdurch der Nutzer mit aufwändigen Eingabeprozeduren belastet wurde.

Diese Aufgabe wird durch ein Verfahren und ein Navigationssystem mit den Merkmalen der unabhängigen Patentansprüche gelöst.

Das Verfahren zur Konfigurierung eines Navigationssystems erfasst Fahrzeug-, Verkehrs- und/oder Fahrerdaten sensorisch und leitet hieraus individuelle Verhaltensmuster und Nutzerpräferenzen für die Routenplanung ab. Ein derartiges Verfahren zur Konfigurierung arbeitet demnach vollständig automatisch auf der Basis sensorisch erfasster Informationen, und der Benutzer des Navigationssystems wird nicht selbst mit der Konfigurierung des Systems belastet. Der Begriff Verhaltensmuster steht dabei für verhältnismäßig eng begrenzte, situationsbedingte Regelmäßigkeiten im Verhalten des Fahrers, zum Beispiel die Vermeidung von Ortsdurchfahrten größerer Städte, die Bevorzugung von Autobahnen oder dergleichen. Bei dem erfindungsgemäßen Verfahren werden durch die Datenanalyse und Datenstatistik automatisch solche signifikanten Verhaltensmuster des Nutzers erfasst. Das gleiche gilt für Nutzerpräferenzen, welche auf höherer Ebene die Vorlieben des Nutzers beziehungsweise die Gewichtung von Optimierungskriterien durch den Nutzer des NavigationsSystems beschreiben. In der Regel besteht zwischen Verhaltensmustern und Nutzerpraferenzen auch eine Verbindung derart, dass die Nutzerpräferenzen Gemeinsamkeiten zusammenfassen und abstrahieren, die in verschiedenen Verhaltensmustern enthalten sind. Die mit Hilfe der Sensorik abgeleiteten Verhaltensmuster beschreiben somit die typischen Nutzerpräferenzen in aktuellen oder zu erwartenden Fahrsituationen und können dem Navigationssystem für eine speziell auf die Präferenzen des Nutzers ausgerichtete Routenberechnung und Zielführung zur Verfügung gestellt werden. Die einzelnen situationsspezifischen Nutzerpräferenzen werden dabei vorzugsweise als explizite Statistik in der Datenbasis des Systems gespeichert und können unabhängig voneinander modifiziert werden.

Die aus den sensorischen Daten abgeleiteten Verhaltensmuster und/oder Nutzerpräferenzen können mit im Navigationssystem vorgegebenen Verhaltensmustern und/oder Nutzerpräferenzen für die Routenplanung verglichen werden. Als Ergebnis des Vergleichs kann festgestellt werden, ob das im Navigationssystem aktive Profil der Nutzerpräferenzen noch zutreffend ist, oder ob hier derartig große Abweichungen bestehen, dass ein Wechsel des Profils notwendig wäre. Ein solcher Wechsel kann dann entweder hin zu einem vollständig neu aufgrund der sensorischen Daten generierten Nutzerprofil geschehen oder aber es kann aus einer Menge von im Navigationssystem vorgegebenen Nutzerprofilen das am besten passende Profil ausgewählt werden.

Beispiele für Nutzerpräferenzen, welche automatisch generiert oder herstellerseitig vorgegeben werden können, sind:
- bevorzugte Straßenklassen (Autobahn, Landstraße, Stadtstraßen)
- bevorzugte Straßenbebauung (zum Beispiel Vermeidung von Straßendurchquerungen)
- Straßenklassenbezogene Fahrtgeschwindigkeit bei freiem Verkehr
- Routenwahl bei Verkehrsstörungen
- Pausenverhalten des Fahrers (wie lange, wie oft etc.)
- Routenbefolgung bei vorgegebenen Optimierungsstrategien (zum Beispiel schnellste Route)
- bevorzugte Beförderungsmittel bei intermodaler Routenplanung (das heißt Routenplanung mit verschiedenen Verkehrsmitteln wie Auto, Zug, ÖPNV etc.).

Abweichungen des Nutzers von der vom Navigationssystem vorgeschlagenen Routenempfehlung können erfasst und zur Anpassung der Verhaltensmuster und der Nutzerpräferenzen verwendet werden. Ein derartiges System zeichnet sich demnach dadurch aus, dass es im Laufe der Benutzung vom Fahrer lernt beziehungsweise sich an diesen anpasst. Diese Anpassung geschieht automatisch, ohne dass der Nutzer mit aufwendigen und technisch anspruchsvollen Eingaben belastet wird.

Erfindungsgemäß werden über die Sensorik Veränderungen der Verhaltensmuster des Nutzers festgestellt, und bei Auftreten solcher Veränderungen wird die sensorische Erfassung von Fahrzeug-, Verkehrs- und/oder Fahrerdaten derart verändert beziehungsweise erweitert, dass die Parameter bestimmt werden können, die mit hoher Wahrscheinlichkeit.die Veränderungen des Verhaltensmusters verursacht haben. Bei Detektion eines von bisherigen Verhaltensmustern abweichenden Verhaltens des Nutzers wird somit automatisch eine Plausibilitätsprüfung eingeschaltet, welche über die sensorische Erfassung zusätzlicher Parameter den Grund für die aktuelle Abweichung des Verhaltensmusters festzustellen versucht. Beispiele für wichtige Erfassungsmerkmale bei einer derartigen Plausibilitätsprüfung sind
- die Straßenklasse
- lokale Geschwindigkeitsbegrenzungen
- der Fahrbahnzustand, u.a. beschrieben durch Nässegrad, Bodenhaftung, Fahrbahnbelag
- die Sichtverhältnisse, u.a. beschrieben durch Niederschlagsstärke, Nebeidichte, Helligkeit
- die lokale Verkehrssituation, u.a. beschrieben durch Eigengeschwindigkeit, Geschwindigkeit, Abstand und Fahrtrichtung von Nachbarfahrzeugen in der Umgebung des eigenen Fahrzeugs
- zeitkritische Zielerreichung, u.a. beschrieben durch absolute Zeitpunkte oder Zeitbereiche wie zum Beispiel Termine, Öffnungszeiten
- der Fahrtzweck, gegebenenfalls ableitbar aus dem Zieltyp wie Dienstreise, Einkaufsfahrt, Urlaubsreise
- Verkehrs- und Straßenzustandsinformationen von Dienstzentralen.

Sobald Parameter der oben genannten Art erfasst worden sind, können sie analysiert werden, um hieraus diejenigen Größen zu bestimmen, welche mit hoher Wahrscheinlichkeit die Abweichung des Verhaltensmusters verursacht haben. So kann zum Beispiel eine vom üblichen Verhaltensmuster abweichend geringe Geschwindigkeit dadurch begründet sein, dass die Sichtverhältnisse außergewöhnlich schlecht sind. Eine Größe kommt dabei insbesondere dann als Ursache für die Abweichung in Frage, wenn sie einen Wert außerhalb ihres Normbereiches aufweist.

Wenn es gelungen ist, die für die Abweichung des Verhaltensmusters relevanten Größen zu isolieren, können hiermit vorhandene Verhaltensmuster angepasst oder nutzerspezifische und situationsbezogene neue Verhaltensmuster geschaffen werden. Dieses verhaltensmuster kann dann in die Datenbank des Navigationssystems aufgenommen werden, um bei zukünftiger Routenplanung berücksichtigt zu werden.

Bei sich ändernden Verhaltensmustern in der Datenbank des Navigationssystems kann von Zeit zu Zeit auch eine statistische Aufbereitung der Verhaltensmuster zu Nutzerpräferenzen erfolgen. Diese kann insbesondere durch Minimierung der signifikanten Erfassungsmerkmale und weitgehende Vermeidung von Ortsbezügen erfolgen, um die Nutzerpräferenzen auch in dem Nutzer unbekannten Gebieten anwenden zu können.

Die Erfindung betrifft ferner ein Navigationssystem, welches aufgrund vorgegebener Verhaltensmuster des Nutzers und aufgrund von Nutzerpräferenzen mindestens eine Routenempfehlung vorschlagen kann. Das Navigationssystem ist dadurch gekennzeichnet, dass ein System zur Erfassung und Verarbeitung von fahrzeug-, verkehrs- und fahrerbezogenen Daten mit dem Navigationssystem gekoppelt ist und dass dieses System die Durchführung einer Konfigurierung nach einem Verfahren der oben beschriebenen Art erlaubt. Das heißt, dass das System insbesondere für eine Verarbeitung der sensorisch erfassten Informationen eingerichtet ist, mit welcher individuelle Verhaltensmuster und Nutzerpräferenzen abgeleitet werden können. Vorzugsweise können mit dem System auch Abweichungen von der Routenempfehlung erfasst werden, so dass das Navigationssystem aufgrund dieser Abweichungen eine Adaptation der Nutzerpräferenzen vornehmen kann. Weiterhin ist das System hinsichtlich der erfassten Daten flexibel, so dass es insbesondere bei Feststellung von Abweichungen von bisherigen Verhaltensmustern die erfassten Parameter derart ausdehnen kann, dass im Sinne einer Plausibilitätsprüfung die für die Verhaltensabweichung relevanten Parameter detektiert werden können.

Das erfindungsgemäße Navigationssystem ermöglicht eine automatisierte Bereitstellung nutzerspezifischer und situationsbezogener Präferenzen, die für eine individuelle Routenplanung benutzt werden können. Vorteilhaft ist dabei insbesondere, dass vom Nutzer keine manuelle Eingabe der Präferenzen über eine Eingabeeinheit erforderlich ist.

### Bester Weg zur Ausführung der Erfindung

Im folgenden wird die Erfindung mit Hilfe der Figuren beispielhaft erläutert.
Es zeigen:
- Fig. 1: schematisch die Komponenten eines Navigationssystems;
- Fig. 2: den Aufbau der erfindungsgemäßen automatischen Nutzerprofilerkennung im Navigationssystem nach Figur 1;
- Fig. 3: schematisch ein erfindungsgemäß modifiziertes Gesamtsystem zur Navigation.

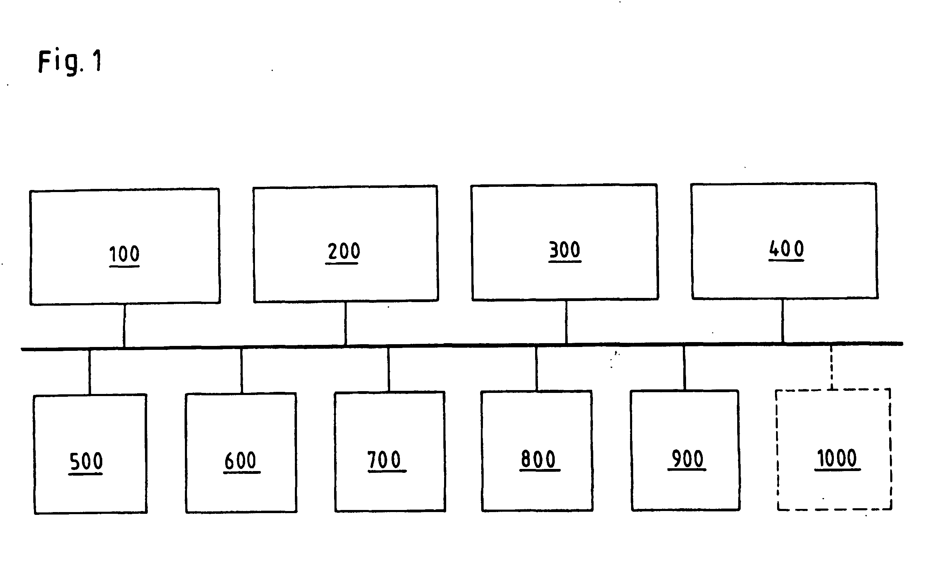

In Figur 1 sind die Komponenten eines Navigationssystems schematisch dargestellt. Das Navigationssystem besteht aus den Subsystemen Digitale Straßenkarte 100, Rechenmodul zur Fahrtroutenbestimmung 400, Positionsbestimmung 300, Systemverwaltung 200, steuerbare Datenerfassungssensorik 500, Eingabeeinheit 600, Ausgabeeinheit 700 und Zielführung 900. Optional kann auch eine Einheit 1000 zur Kommunikation mit anderen Systemen außerhalb des Navigationssystems vorhanden sein.

Erfindungsgemäß enthält das Navigationssystem ferner eine Vorrichtung 800 zur automatischen Erkennung von individuellen Nutzerpräferenzen. Die Vorrichtung 800 kann wie dargestellt ein Subsystem des Navigationssystems sein, sie kann jedoch auch separat vom Navigationssystem mit eigener Datenerfassungssensorik und einer Schnittstelle zur Bereitstellung der Verhaltensmuster beziehungsweise Nutzerpräferenzen betrieben werden.

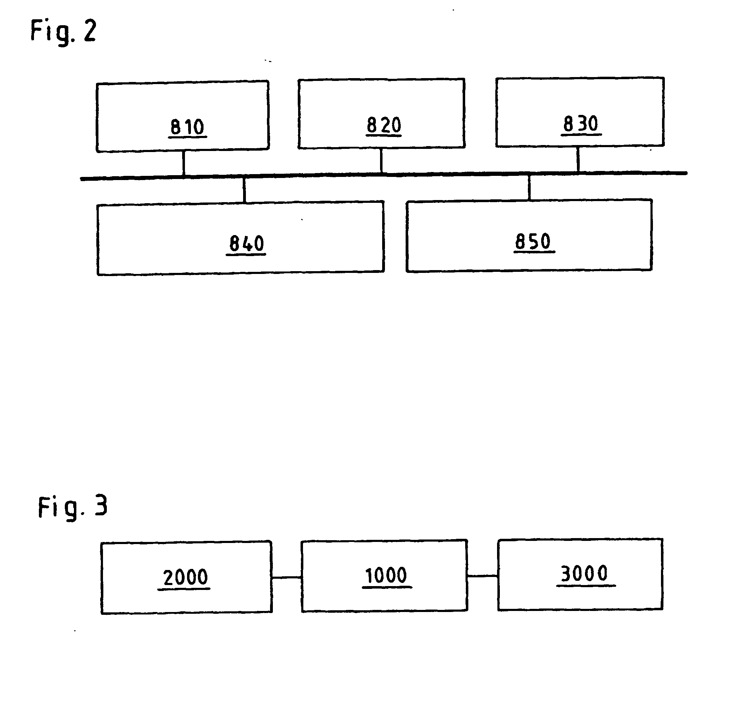

Der genauere Aufbau der Vorrichtung 800 zur Nutzerprofilerkennung ist in Figur 2 dargestellt. Demnach besteht diese Vorrichtung 800 aus einer Erfassungseinheit 820, die die von der Sensorik 500 und der digitalen Karte 100, der Positionsbestimmung 300, der Fahrtroutenbestimmung 400 und der Eingabeeinheit 600 (für gegebenenfalls erforderliche kontextbezogene Nutzereingaben) zu erfassenden Daten steuert, diese Daten vorverarbeitet (zum Beispiel durch Kompression oder Ableitung nicht direkt messbarer Größen), und die Daten schließlich in der Rohdatenbasis 810 ablegt.

In der Einheit 830 zur Datenaufbereitung erfolgt die statistische Aufbereitung der Daten aus der Rohdatenbasis 810 zu Verhaltensmustern. Aus diesen werden in der Einheit 840 zur Erkennung von Nutzerpräferenzen nutzerspezifische und situationsbezogene Nutzer präferenzen extrahiert und in der Datenbasis 850 für die Nutzung im Navigationssystem bereitgestellt. Die Erfassungseinheit 820 kann optional auch Daten verwenden, die von einem anderen System erfasst worden sind und über die Kommunikationseinheit 1000 dem Subsystem 800 bereitgestellt wurden.

Die Einheit 840 ist in der Lage, anhand des Merkmalsvergleichs von bisher aufgezeichneten Verhaltensmustern mit den aktuell erfassten Merkmalen neue Verhaltensmuster zu erkennen und aus diesen automatisch neue Nutzerpräferenzen zu generieren und diese in der Datenbasis 850 abzulegen. Alternativ kann die Einheit 840 auch typische Nutzerpräferenzen, die vom Gerätehersteller für einen typischen Durchschnittsfahrer vorgegeben worden sind, anhand der aufgezeichneten aktuellen und bisherigen Merkmale in der Datenbasis 810 oder anhand der automatisch generierten Verhaltensmuster hinsichtlich ihrer Gültigkeit für den aktuellen Nutzer überprüfen. Bei Feststellung von erheblichen Abweichungen können die aktiven Verhaltensmuster adaptiert werden, oder es kann aus einem vorgegebenen Repertoire an Verhaltensmustern ein passenderes ausgewählt werden.

Die Generierung von neuen Nutzerpräferenzen oder die Adaptation vorgegebener Nutzerpräferenzen erfolgt nur bei ausreichender statistischer Sicherheit der Daten, für die eine zu überschreitende Schranke vorgegeben werden kann. Eine Bestimmung ist beispielsweise über die Häufigkeit der Verhaltensmuster möglich.

In Figur 3 ist ein Gesamtsystem dargestellt, bei dem zumindest Teile der Vorrichtung 800 autark im mobilen Teilsystem 2000 oder im ortsfesten Teilsystem 3000 angeordnet sind, wobei die Systeme 2000 und 3000 über eine Kommunikationseinheit 1000 verbunden sind.

Die Arbeitsweise des in den Figuren dargestellten Navigationssystems wird im folgenden zunächst am Beispiel einer situationsabhängigen Fahrtgeschwindigkeit dargestellt. Die Einheit 840 erkennt anhand der standardmäßig aufgezeichneten Erfassungsmerkmale . (zum Beispiel Geschwindigkeit, Straßenklasse), dass der Fahrer auf der Autobahn statt der typischen Fahrgeschwindigkeit von 130 km/h nur 80 km/h fährt. Die Abweichung von der typischen Fahrtgeschwindigkeit hat somit eine bestimmte Schranke überschritten, wobei diese Schranke gegebenenfalls auch nutzerspezifisch vorgegeben werden kann. Nach Feststellung der beschriebenen Situation steuert die Erfassungseinheit 820 die Sensorik 500 so an, dass zusätzliche Erfassungsmerkmale aufgezeichnet und ausgewertet werden können. Bei diesen Erfassungsmerkmalen kann es sich zum Beispiel um die Bestimmung der Sichtweite, des Straßenzustands und der lokalen Verkehrssituation handeln. Zusätzlich kann die Erfassungseinheit 820 über die Kommunikationseinheit 1000 eine Datenzentrale bezüglich zusätzlicher Verkehrszustandsinformationen für den relevanten Straßenbereich abfragen. Die einlaufenden Daten werden in der Rohdatenbasis 810 gespeichert und der Datenauswertung 830 zugeführt.

In der Einheit 830 erfolgt dann die Bestimmung der signifikanten Erfassungsmerkmale, die als Ursache für die von der Einheit 840 erkannte Abweichung von der typischen Fahrtgeschwindigkeit vermutet werden, und die voraussichtlich eine neue Fahrsituation beziehungsweise ein neues Verhaltensmuster beschreiben. So kann die Einheit 830 beispielsweise feststellen, dass die lokale Verkehrssituation das Fahrzeug nicht beeinflusst (zum Beispiel existieren keine mit geringem Abstand vorausfahrende Fahrzeuge mit gleicher Geschwindigkeit), dass der Straßenzustand unkritisch ist, dass jedoch die Sichtweite durch mittelstarken Regen eingeschränkt ist. Ein Erfassungsmerkmal wird von der Einheit 830 im allgemeinen dann als relevant isoliert, wenn es einen von seinem Normbereich, der in einer Datenbank abgelegt sein kann, abweichenden Wert hat.

Die Einheit 840 vergleicht nun das aktuelle Verhaltensmuster mit gegebenenfalls bereits existierenden Verhaltensmustern und leitet beispielsweise im dargelegten Fall hieraus eine Nutzerpräferenz gemäß der Regel "Bei eingeschränkter Sichtweite durch mittlere bis stärke Regenfälle fährt der Fahrer deutlich langsamer auf Autobahnen als die typische Fahrtgeschwindigkeit" ab. Durch die fortlaufende Adaptation der Nutzerpräferenzen kann diese formulierte Präferenz noch weiter generalisiert werden, beispielsweise zu der Regel "Bei eingeschränkter Sichtweite wird die straßenklassentypische Fahrtgeschwindigkeit um 30% verringert".

Als weiteres Beispiel für die Funktionsweise des in den Figuren 1 bis 3 dargestellten Systems sei die Veränderung des Routenwahlverhaltens des Navigationssystems betrachtet. Ausgangssituation hierfür ist beispielsweise, dass die Einheit 840 eine Abweichung von der vorgegebenen Fahrtroutenempfehlung erkennt und feststellt, dass es schon mehrere ähnliche Verhaltensmuster gibt.

In diesem Falle steuert die Erfassungseinheit 820 daher die Sensorik 500 so an, dass zusätzliche Erfassungsmerkmale unter anderem für die Bestimmung der Sichtweite, des Straßenzustands und der lokalen Verkehrssituation aufgezeichnet und ausgewertet werden können. Zusätzlich kann die Erfassungseinheit 820 über die Kommunikationseinheit 1000 eine Datenzentrale bezüglich zusätzlicher Verkehrszustandsinformationen für den relevanten Straßenbereich abfragen. Hierbei kann es sich zum Beispiel in noch nicht berücksichtigten Verkehrsstörungen in vorausliegenden Streckenabschnitten der Fahrtroute handeln. Die einlaufenden Daten werden in der Rohdatenbasis 810 gespeichert und anschließend der Datenauswertung 830 zugeführt.

In der Einheit 830 zur Datenauswertung erfolgt die Bestimmung der signifikanten Erfassungsmerkmale, die als Ursache für die von der Einheit 840 erkannte Abweichung von der vorgegebenen Empfehlung der Fahrtroute vermutet werden können und die eine neue Fahrsituation beziehungsweise ein neues Verhaltensmuster beschreiben. So kann die Einheit 830 beispielsweise feststellen, dass die zusätzlichen situationsbeschreibenden Erfassurigsmerkmale keine Besonderheiten aufweisen, dass jedoch der Fahrer gerade eine Ortsumgehungsstraße gewählt hat.

Die Einheit 840 zur Erkennung von Nutzerpräferenzen vergleicht dieses Verhaltensmuster mit gegebenenfalls bereits existierenden Verhaltensmustern und leitet in diesem Fall beispielsweise hieraus eine Nutzerpräferenz gemäß der Regel "Bei mittelgroßen Ortschaften Ortsumgehungsstraßen bevorzugen" ab. Die Routenberechnung kann dann diese Nutrerpräferenz derart verwenden, dass die folgenden Fahrtrouten immer Durchquerungen mittelgroßer Ortschaften vermeiden, auch wenn sich die Strecke dadurch insgesamt verlängert.

Das erfindungsgemäße Navigationssystem erlaubt somit eine automatische Erkennung von individuellen Nutzerpräferenzen, ohne dass sich der Benutzer des Systems hiermit auseinandersetzen muss. Das System passt sich automatisch im Laufe seines Gebrauchs an den Benutzer an, so dass zum Beispiel ein wiederholtes Befahren bestimmter Straßentypen mit untypischen Geschwindigkeiten (zum Beispiel 80 km/h auf Autobahnen und 110 km/h auf Bundesstraßen) automatisch zur Empfehlung von Alternativrouten mit Straßenklassen führt, auf denen unter den vorgenannten Voraussetzungen schnellere Routen ermittelt werden konnten. Weiterhin kann ein wiederholtes absichtliches Nichtbefolgen der ursprünglichen Zielführungsanweisungen auf einer festgelegten Strecke in immer gleicher Art und Weise schließlich zur Empfehlung einer entsprechend korrigierten Fahrtroute führen.

## Patentansprüche

1. Verfahren zur Konfigurierung eines Navigationssystems, welches dazu ausgebildet ist, eine Routenplanung unter Berücksichtigung von individuellen Verhaltensmustern des Nutzers und/oder Nutzerpräferenzen durchzuführen,
wobei Fahrzeug-, Verkehrs- und/oder Fahrerdaten sensorisch erfasst und hieraus automatisch Verhaltensmuster und/oder Nutzerpräferenzen abgeleitet werden,
wobei Veränderungen der Verhaltensmuster des Nutzers durch Vergleich mit vorhandenen Verhaltensmustern festgestellt werden,
wobei bei Auftreten solcher Veränderungen die sensorische Erfassung von Fahrzeug-, Verkehrs- und/oder Fahrerdaten erweitert wird, und zusätzlich Straßenzustand, Sichtweite und/oder Verkehrszustandsinformationen erfasst und/oder
Verkehrszustandsinformationen einer Datenzentrale abgefragt und derart ausgewertet werden, dass die Parameter bestimmt werden, die mit hoher Wahrscheinlichkeit die Veränderungen des Verhaltensmusters verursacht haben,und
wobei nach Isolierung der für die Abweichung des Verhaltensmusters relevanten Parameter hiermit vorhandene Verhaltensmuster angepasst oder nutzerspezifische und situationsabhängige neue Verhaltensmuster geschaffen werden.

2. Navigationssystem, welches dazu ausgebildet ist, eine Routenplanung unter Berücksichtigung von individuellen Verhaltensmustern des Nutzers und/oder Nutzerpräferenzen durchzuführen,
welches ferner dazu ausgebildet ist,
- Fahrzeug-, Verkehrs- und/oder Fahrerdaten sensorisch zu erfassen und hieraus automatisch Verhaltensmuster und/oder Nutzerpräferenzen abzuleiten, wobei Veränderungen der Verhaltensmuster des Nutzers durch Vergleich mit vorhandenen Verhaltensmustern festgestellt werden,
- bei Auftreten solcher Veränderungen die sensorische Erfassung von Fahrzeug-, Verkehrs- und/oder Fahrerdaten zu erweitern und zusätzlich Straßenzustand, Sichtweite und/oder Verkehrszustandsinformationen zu erfassen und/oder Verkehrszustandsinformationen einer Datenzentrale abzufragen und diese Informationen derart auszuwerten, dass die Parameter bestimmt werden, die mit hoher Wahrscheinlichkeit die Veränderungen des Verhaltensmusters verursacht haben, und
- nach Isolierung der für die Abweichung des Verhaltensmusters relevanten Parameter hiermit vorhandene Verhaltensmuster anzupassen oder nutzerspezifische und situationsabhängige neue Verhaltensmuster zu schaffen.

## Claims

1. Method for configuring a navigation system which is designed to perform route planning taking into account individual behavioural patterns of the user and/or user preferences,
where vehicle, traffic, and/or driver data are captured by sensor and are used for automatically deriving behavioural patterns and/or user preferences,
where changes in the behavioural patterns of the user are established through comparison with existing behavioural patterns,
where the occurrence of such changes prompts the sensor capture of vehicle, traffic and/or driver data to be extended and additionally the road condition, the visibility and/or traffic-condition information is/are captured and/or
traffic-condition information is requested from a data control centre and is evaluated in order to determine the parameters which have a high probability of having caused the changes in the behavioural pattern, and
where, having isolated the parameters which are relevant to the discrepancy in the behavioural pattern, these parameters are used to adapt existing behavioural patterns or to create new behavioural patterns which are specific to the user and dependent on the situation.

2. Navigation system which is designed to perform route planning taking into account individual behavioural patterns of the user and/or user preferences,
and which is also designed
- to capture vehicle, traffic and/or driver data by sensor and to use these data for automatically deriving behavioural patterns and/or user preferences, with changes in the behavioural patterns of the user being established through comparison with existing behavioural patterns,
- so that upon the occurrence of such changes it extends the- sensor capture of vehicle, traffic and/or driver data and it additionally captures the road condition, the visibility and/or traffic-condition information and/or requests traffic-condition information from a data control centre and evaluates this information in order to determine the parameters which have a high probability of having caused the changes in the behavioural pattern, and
- so that, having isolated the parameters which are relevant to the discrepancy in the behavioural pattern, it uses these parameters to adapt existing behavioural patterns or to create new behavioural patterns which are specific to the user and dependent on the situation.

## Revendications

1. Procédé de configuration d'un système de navigation permettant de planifier un trajet en tenant compte de modèles de comportements individuels de l'utilisateur et/ou des préférences de l'utilisateur, selon lequel
on saisit par des capteurs, les données concernant le véhicule, la circulation et/ou le conducteur et on en déduit automatiquement un modèle de comportement et/ ou de préférence d'utilisation,
une modification du modèle de comportement de l'utilisateur se constatant par la comparaison avec des modèles de comportements existants,
et lorsque de telles modifications se produisent, on étend la saisie par capteur des données relatives au véhicule, à la circulation, et/ou au conducteur et on saisit en outre l'état de la chaussée, la visibilité et/ ou l'état de la circulation et/ou on demande des informations relatives à l'état de la circulation à une centrale de données et on les exploite de façon à déterminer les paramètres qui occasionnent avec une grande probabilité, les modifications du modèle de comportement et
après avoir isolé les paramètres concernant la déviation par rapport au modèle de comportement, on adapte le modèle de comportement existant ou on crée de nouveaux modèles de comportements spécifiques à l'utilisateur et dépendant de la situation.

2. Système de navigation destiné à planifier un trajet en tenant compte de modèles de comportements individuels de l'utilisateur et/ou de préférence de l'utilisateur et qui est en outre réalisé pour
- saisir par des capteurs des données concernant le véhicule, la circulation et/ ou le conducteur et en déduire automatiquement un modèle de comportement et/ou des préférences d'utilisateur, des modifications du modèle de comportement de l'utilisateur se déterminant par comparaison avec des modèles de comportements existants,
- et lorsque de telles modifications se produisent, on étend la saisie par capteur des données concernant le véhicule, la circulation et/ ou le conducteur et en outre l'état de la chaussée, la visibilité et/ou les informations d'état de circulation et/ou on demande des informations d'états de circulation à une centrale de données et on exploite ces informations pour déterminer les paramètres qui ont été avec la plus grande probabilité, la cause des modifications du modèle de comportement et
- après isolation des paramètres concernant la déviation du modèle de comportement on adapte ainsi le modèle de comportement existant et/ou des modèles spécifiques à l'utilisateur ou on crée des modèles de comportements, nouveaux, dépendant de la situation.
